# EUROPEAN PATENT APPLICATION

(11) **EP 1 381 103 A2**
(43) Date of publication of application: **14.01.2004**
(21) Application number: 03101756.9
(22) Date of filing: 16.06.2003
(51) Int. Cl.: H01M 8/16, H01M 8/24

(54) **Biocatalytic fuel cell arrangement and method of generating electric power using same**

(30) Priority: 28.06.2002 FI 20021286
(71) Applicant: Halme, Aame, 02180 Espoo (FI); Korhola, Matti, 00630 Helsinki (FI); Ranta, Anja, 02170 Espoo (FI); Suomela, Jussi, 02280 Espoo (FI); Zhang, Xia-Chang, 02600 Espoo (FI)
(72) Inventor: Halme, Aame, 02180 Espoo (FI); Korhola, Matti, 00630 Helsinki (FI); Ranta, Anja, 02170 Espoo (FI); Suomela, Jussi, 02280 Espoo (FI); Zhang, Xia-Chang, 02600 Espoo (FI)
(74) Representative: Valkeiskangas, Tapio

(57) **Abstract**

An arrangement and method for generating electric power, the arrangement comprising several biocatalytic fuel cell units (1) for generating electric power. The arrangement also comprises one ore more capacitors (2, 3) for balancing and storing the voltage generated by the biocatalytic fuel cell units (1), and means (4, 5) for connecting the voltage generated by the biocatalytic fuel cell units (1) cyclically to the one or more capacitors (2, 3).

## Description

### BACKGROUND OF THE INVENTION

The present invention relates to an arrangement and method for generating electric power by using biocatalytic fuel cell units. The invention also relates to a power source using biocatalytic fuel cell units.

A biocatalytic fuel cell is a device that transforms chemical energy directly to electricity. Suitable fuels, i.e. substrates, for cells of this type are different organic compounds, such as sugars and alcohols. The driving force of the cell is based on the redox reaction of the substrate when using a live microorganism, cell-bound enzyme or isolated enzyme as the catalyst. The working principle of a biocatalytic cell is similar to that of a chemical fuel cell. The prime difference is that in a biological fuel cell, enzyme(s), and not noble metal, such as platinum, acts as the catalyst, and that the working conditions are mild. The temperature and pH of the solution are within the biological range, which refers to the operating conditions of the organism and enzyme(s).

Today, special attention is paid to energy sources that are suitable for portable, low-power electronic devices, such as mobile phones and computers. Since the use of hydrogen as a fuel is not possible in practice due to safety reasons, direct-acting fuel cells that work without a reformer and use logistic fuels have been the focus of interest. The aim is to achieve a better storage capacity and more ecological structural and material solutions than in conventional accumulators. The drawback of chemical fuel cells is that, to be powerful, they require intensive reaction conditions, such as high temperature and strongly acid or alkaline solutions. Their use as power sources in portable electronic devices or the like is therefore extremely problematic.

Biological fuel cells with an enzyme as the catalyst are previously known in the field. For instance, published US patent 6,294,281 describes a biological fuel cell that uses human fluids or plant sap as its energy source. The electric power generated by the fuel cell of the publication is directly used to drive a very low-power device or to charge an accumulator or battery.

A general problem with biocatalytic fuel cells arises from the low voltage derived from the fuel cell units. It is known per se to connect voltage sources in series or parallel as necessary, but with biocatalytic fuel cells, this caused problems, since the electric properties of fuel cells, such as the internal resistance, may differ from each other considerably. Only a few cells can then reasonably be connected in series, and the number is not enough to suffice for all applications. Connecting several cells in series causes an uneven operation of units and possibly leads to the termination of the operation of the unit and consequently also of the entire series connection. In addition, the internal resistance of cells is significantly high in direct alcohol fuel cells, which further weakens the operation of such cells connected in series.

### BRIEF DESCRIPTION OF THE INVENTION

It is an object of the present invention to provide an arrangement and method for generating electric power and a power source, which avoid the above-mentioned drawbacks and enable the generation of electric power from biocatalytic fuel cells in a simpler and, at the same time, more versatile manner than before. This object is achieved by an arrangement, method and power source of the invention, which are characterized by what is stated in independent claims 1, 6, 8 and 9. Preferred embodiments of the invention are set forth in the dependent claims.

The invention is based on the idea that by chopping the output current of the biocatalytic fuel cells, the output voltage of a fuel cell increases momentarily. The fuel cell is then not used as a continuous voltage source, but its output is switched alternately on to an intermediate storage, such as capacitor or accumulator, and off the intermediate storage. It has been found that the chopping of the output current improves the surface reactions of electrodes and mass transfer close to the electrodes in biocatalytic fuel cells in particular.

The advantage of the solution of the invention is that according to the principles of the method and arrangement, biocatalytic fuel cells can be functionally connected in parallel or in series in a desired manner and, at the same time, the output voltage of a single fuel cell unit can be increased, which also increases the output voltage of the entire system and the capacity obtained from the unit size. In addition, because fuel cell units are only functionally connected in series in higher numbers, the differences in the electric properties of the units do not in any way affect the operation of the entity formed by unit cells.

### BRIEF DESCRIPTION OF THE FIGURES

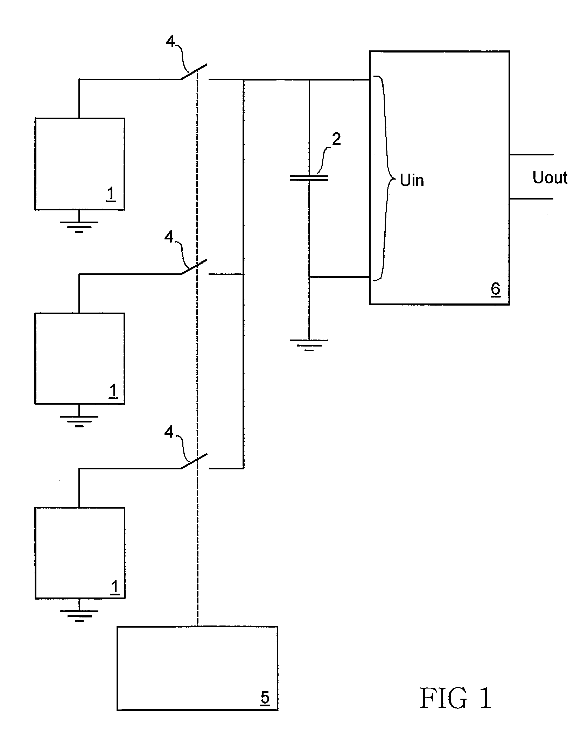

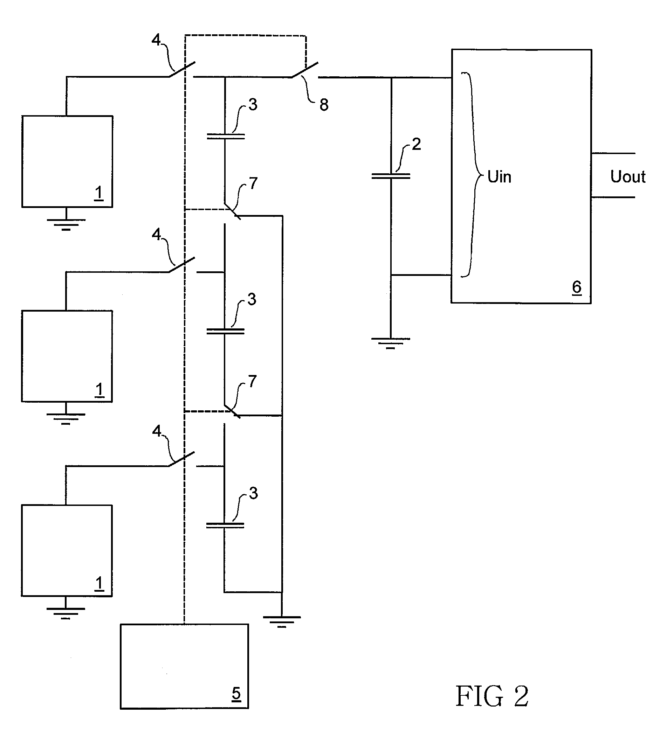

The invention will now be described in greater detail by means of preferred embodiments and with reference to the attached drawings, in which
Figures 1 and 2 show a few embodiments of the arrangement of the invention in general.

### DETAILED DESCRIPTION OF THE INVENTION

Figure 1 shows an embodiment of the arrangement of the invention, in which biocatalytic fuel cells 1 are functionally connected in parallel. The functionally parallel connection is made without any galvanic coupling between the cell units, whereby possible different electric properties of the cell units do not affect the operation of the connection in any way. According to the invention, the fuel cell units are connected through a controllable switch to an intermediate storage, such as capacitor or accumulator, in such a manner that the cell unit can be connected in parallel to the intermediate storage. Figure 1 shows a connection that has three biocatalytic fuel cell units 1 that are connected with controllable switches 4 to one pole of a capacitor 2 while the other poles of the units 1 and capacitor are connected to ground in the figure. Each cell unit can thus be connected through switches to the same capacitor. Figure 1 only shows three cell units; it is, however, clear that the number of cell units can be selected according to the power required by each application. In the embodiments of Figures 1 and 2, and thus also in the description, the intermediate storage is a capacitor 2. According to a preferred embodiment of the invention, the intermediate storage can also be an accumulator that, like the capacitor, is a chargeable and dischargeable electrically charging device.

The controllable switches according to the invention are controlled cyclically to and from conducting state to increase the output voltage of the fuel cell units. In the case of Figure 1, the switches 4 are controlled alternately into conducting state, wherein each cell unit is in turn in electric contact with the capacitor and generates voltage to it. As mentioned earlier, pulse loading biocatalytic fuel cells improves the operation of the cells and increases the mean power of the cells. The voltage of the open circuit of one cell is typically 0.6 to 0.9 volts and a cell loaded in an operational mode produces a voltage of 0.3 to 0.5 volts. The use of the method of the invention is naturally not limited to using cells not connected in series. If the voltage from the cell units needs to be increased, enough cells can be coupled galvanically to produce an appropriate operation. The solution according to the method of the invention is found to improve especially the power obtained from biocatalytic fuel cells. The method of the invention can naturally also be applied to other cell types, but the provided benefit is not as good as with biocatalytic cells.

Figure 1 further shows a control circuit 5 that controls the switches 4. At its simplest, the control circuit is a clock circuit that clockedly controls the switches one at a time. The switches 4 are typically low-loss semiconductor switches, such as FET transistors.

The control circuit 5 can also comprise other functions than clockedly controlling the switches. According to the embodiment of the method of the invention, one or more properties of the cells are defined and on the basis of the definition, the controllable switch of a cell having a specific property is set to conducting state. An example of such a definable property of a cell is the voltage of the cell, and the cell with the highest voltage is connected to the intermediate storage. This way, the state of the cells can be monitored and the cell that has the highest energy supply can be used to supply energy to the intermediate storage. Other possible definable properties of the cells include the increase or decrease rate of the cell voltage and the temperature of the cell. The control circuit can also perform the control in such a manner that it continuously defines the voltages of the cells, i.e. even when the cell is connected to the intermediate storage. The control circuit can then stop controlling said switch when the voltage drops below a preset voltage limit, and transfer the control to the unconnected cell with the highest voltage.

In the embodiment of Figure 1, the task of the capacitor 2 is to balance the current obtained from the cell units and to serve as a momentary energy storage. According to a preferred embodiment of the arrangement of the invention, the arrangement also comprises a voltage converter 6. The voltage converter receives the voltage of the capacitor 2 to its input Uin. The voltage converter is a device, in which the input voltage is converted to output voltage Uout with the desired properties in each case. The voltage converter applied to the invention is preferably a DC/DC converter that converts the input direct voltage to output voltage. The converter can be any suitable converter generally known in the field.

Figure 1 shows a power source of the invention, in which the cell units are functionally connected in parallel. This type of power source is suited for use in portable electronic devices, for instance, to supply power, in which case the electronic device receives its supply from the output Uout of the power source.

Figure 2 shows a second embodiment of the power source of the invention that utilizes the method and arrangement of the invention. In the embodiment of Figure 2, the biocatalytic cells are virtually connected in series by using a separate capacitor connection. The embodiment of Figure 2 differs from that of Figure 1 in that all cell units 1 have their own fuel-cell-unit-specific capacitors 3 that are charged by connecting the units in parallel with them through first semiconductor switches 4. The charging is done according to the method of the invention in pulses to obtain a higher power.

The power source of the invention and Figure 2 also comprises second semiconductor switches 7 that are arranged to connect the fuel-cell-unit-specific capacitors 3 in series, and a third semiconductor switch 8 that is arranged to connect the series-connected capacitors 3 in parallel with the balancing capacitor 2. As already stated above, the embodiment of Figure 2 also shows capacitors as intermediate storages. Similarly, the components that are used as intermediate storages according to the embodiment of the invention can also be accumulators.

The second semiconductor switches and the third semiconductor switch are controlled together at the same time, whereby the capacitors charged by the cell units connect together in series and in parallel with the balancing capacitor 2. The balancing capacitor is used in the same manner as in the embodiment of Figure 1.

The power source of the invention further comprises a control circuit and voltage converter. The control circuit is arranged to control the semiconductor switches, and it can be implemented as a timer circuit that simultaneously controls the switches 4 momentarily to conducting state to charge the capacitors 3. When the control circuit controls the switches 4 to blocking state, it also at the same time controls the switches 7 in such a manner that the capacitors 3 connect in series. While the switches 7 are being controlled, the switch 8 is also controlled to conducting state to allow the charge of the capacitors to transfer to the capacitor 2 and voltage converter 6.

The switches 7 have two conducting states. During the charging of the cell-specific capacitors 3, the switches connect the capacitors in parallel with the cells, i.e. in the case of Figure 2, to the ground. In the second state, the capacitors 3 are connected in series, and at the same time the charge of the capacitors is allowed to discharge through the switch 8. This way, the biocatalytic fuel cells can be functionally connected in series to achieve a higher voltage. The capacitor 2 is connected to the voltage converter in the same manner as in the embodiment of Figure 1. The voltage obtained in functional series connection and supplied to the converter input Uin is higher than in functional parallel connection with the same number and type of cells.

The invention is above described in such a manner that the unit cells, pulse-controlled switches, electronic circuit executing control and intermediate storages are in one and the same entity and together form the power source. It is, however, possible to locate part of the components required to implement the invention in another device, such as an electronic device. In such a case, the electronic device contains all other means for implementing the invention, except the cell units. The electronic device then contains the controllable switch components, the logic executing control, the intermediate storage and typically also the voltage converter. Other possible variations are naturally also possible in the distribution of the components required to implement the invention.

The above describes two embodiments of the power source of the invention based on the method and arrangement of the invention. It is, however, clear that by applying the method of the invention, it is possible to construct power sources of different types for numerous different requirements.

It is obvious to a person skilled in the art that the basic idea of the invention can be implemented in many different ways. The invention and its embodiments are thus not restricted to the examples described above, but can vary within the scope of the claims.

## Claims

1. An arrangement for generating electric power, which arrangement comprises several biocatalytic fuel cell units (1) for the generation of electric power, **characterized in that** the arrangement also comprises
one or more intermediate storages (2, 3) for balancing and storing the voltage generated by the biocatalytic fuel cell units (1), and
means (4,5) for connecting the voltage generated by the biocatalytic fuel cell units (1) cyclically to the one or more intermediate storages (2, 3).

2. An arrangement as claimed in claim 1, **characterized in that** the means for connecting the fuel cell units comprise switch means (4) and a control circuit (5) arranged to control them.

3. An arrangement as claimed in claim 1 or 2, **characterized in that** the arrangement also comprises a voltage converter (6) that is arranged to convert the voltage stored in the intermediate storage and to provide output voltage.

4. An arrangement as claimed in claim 3, **characterized in that** the voltage converter (6) is a DC/DC converter.

5. An arrangement as claimed in any one of claims 2 to 4, **characterized in that** the switch means (4) are semiconductor switches.

6. An arrangement as claimed in any one of claims 1 to 5, **characterized in that** the intermediate storages are capacitors or accumulators.

7. A method for generating electric power, in which method electric power is generated with biocatalytic fuel cell units, **characterized in that** the fuel cell units are connected through a controllable switch to one or more intermediate storages, and the method comprises a step for
controlling the controllable switches cyclically to and from conducting state to increase the output voltage of the fuel cell units.

8. A method as claimed in claim 7, **characterized in that** the method also comprises a step for defining one or more properties of the cells, and
controlling on the basis of the definition the controllable switch of a cell having a specific property to conducting state.

9. A method as claimed in claim 8, **characterized in that** the property to be defined is the voltage of the cell.

10. A method as claimed in claim 8, **characterized in that** the method also comprises a step for continuously defining the voltages of the cells,
for controlling on the basis of the definition, the controllable switch of a specific cell to conducting state, and
for keeping the switch in conducting state until the voltage of the specific cell decreases below a predefined limit value.

11. A method as claimed in any one of claims 7 to 10, **characterized in that** the method also comprises a step for converting the voltage stored in the intermediate storage with a voltage converter to provide output voltage.

12. A method as claimed in any one of claims 7 to 11, **characterized in that** the intermediate storages are capacitors or accumulators.

13. A power source that comprises several biocatalytic fuel cell units (1) for generating electric power, wherein the fuel cell units comprise electrodes with the output voltage of a fuel cell unit between them, **characterized in that** the power source also comprises
an intermediate storage (2) for balancing and storing the voltage generated by the biocatalytic fuel cell units (1),
first semiconductor switches (4) connected to one electrode of each biocatalytic fuel cell unit for connecting the output voltages of the units cyclically to the intermediate storage,
a control circuit (5) for controlling the first semiconductor switches (4), and
a voltage converter (6) that comprises an input (Uin) connected to the poles of the intermediate storage (2), and an output (Uout) that is arranged to provide output voltage.

14. A power source as claimed in claim 13, **characterized in that** the intermediate storages are capacitors or accumulators.

15. A power source that comprises several biocatalytic fuel cell units (1) for generating electric power, wherein the fuel cell units comprise electrodes with the output voltage of a fuel cell unit between them, **characterized in that** the power source also comprises
a balancing intermediate storage (2) for balancing and storing the voltage generated by the biocatalytic fuel cell units,
fuel-cell-unit-specific intermediate storages (3) and first semiconductor switches (4), the first semiconductor switches (4) being arranged to connect the fuel-cell-unit-specific intermediate storages (3) cyclically in parallel with the fuel cells (1),
second semiconductor switches (7) arranged to connect the fuel-cell-unit-specific intermediate storages (3) in series,
a third semiconductor switch (8) arranged to connect the series-connected intermediate storages (3) in parallel with the balancing intermediate storage (2),
a control circuit (5) for controlling the semiconductor switches, and
a voltage converter (6) that comprises an input (Uin) connected to the poles of the balancing intermediate storage (2), and an output (Uout) that is arranged to provide output voltage.

16. A power source as claimed in claim 15, **characterized in that** the intermediate storages are capacitors or accumulators.
